# EUROPEAN PATENT APPLICATION

(11) **EP 4 738 768 A1**
(43) Date of publication of application: **06.05.2026**
(21) Application number: 25210241.3
(22) Date of filing: 22.10.2025
(51) Int. Cl.: H04L 9/40, G06F 21/31

(54) **INFORMATION PROCESSING APPARATUS AND METHOD OF CONTROLLING INFORMATION PROCESSING APPARATUS**

(30) Priority: 30.10.2024 JP 2024190830
(71) Applicant: Sharp Kabushiki Kaisha, Sakai City, Osaka 590-8522 (JP)
(72) Inventor: MASUDA, Akitoshi, Sakai City, Osaka, 590-8522 (JP)
(74) Representative: Müller Hoffmann & Partner

(57) **Abstract**

An information processing apparatus according to the disclosure includes: a communicator that can communicate with a server via a network, the server executing first authentication based on first authentication information including an account name; and a storage, and receives a refresh token transmitted by the server according to a result of the first authentication. Storage of the refresh token in the storage is controlled based on a setting related to whether or not to store the refresh token in the storage.

## Description

### Field of the Invention

The disclosure relates to an information processing apparatus and the like. Note that the disclosure is based on Japanese Patent Application No. 2024-190830 filed in Japan on October 30, 2024, the contents of which are incorporated herein by reference.

### Background Art

Some information processing apparatuses such as a Multi-Function Printer/Peripheral (MFP) use a web service using an access token and a refresh token issued by an authentication server.

### Citation List

### Patent Literature

PTL 1: JP 2021-060744 A

### Summary

### Technical Problem

An object to be solved by the disclosure is to facilitate management related to authentication in an information processing apparatus that uses a service on a network using authentication with a token.

### Solution to Problem

The disclosure provides an information processing apparatus that includes: one or more controllers; a communicator that can communicate with a server via a network, the server executing first authentication based on first authentication information including an account name; and a storage, and the one or more controllers receive a refresh token transmitted by the server according to a result of the first authentication, and controls storage of the refresh token in the storage based on a setting related to whether or not to store the refresh token in the storage.

Furthermore, the disclosure also provides a method of controlling an information processing apparatus that includes a communicator that can communicate with a server via a network, the server executing first authentication based on first authentication information including an account name; and a storage, and includes: a step of receiving a refresh token transmitted by the server according to a result of the first authentication; and a step of controlling storage of the refresh token in the storage based on a setting related to whether or not to store the refresh token in the storage.

### Advantageous Effects of Disclosure

According to the disclosure, it is possible to facilitate management related to authentication in an information processing apparatus that uses a service on a network using authentication with a token.

### Brief Description of the Drawings

FIG. 1 is a schematic conceptual diagram of an authentication system according to a first embodiment of the disclosure.
FIG. 2 is a block diagram view of a Multi-Function Printer/Peripheral (MFP) according to the first embodiment of the disclosure.
FIG. 3(A) is a block diagram for describing a configuration of a controller of the MFP according to the first embodiment of the disclosure, and FIG. 3(B) is a block diagram for describing a configuration of a storage of the MFP according to the first embodiment of the disclosure.
FIG. 4 is a flow chart for describing an operation of the MFP according to the first embodiment of the disclosure.
FIG. 5 is a flow chart for describing the operation of the MFP according to the first embodiment of the disclosure.
FIG. 6 is a flow chart for describing the operation of the MFP according to the first embodiment of the disclosure.
FIG. 7 is a schematic conceptual diagram for describing an operation of the authentication system according to the first embodiment of the disclosure.
FIG. 8 illustrates an example of a screen displayed on a display of the MFP according to the first embodiment of the disclosure.
FIG. 9 is a diagram for describing transition of the screen displayed on the display of the MFP according to the first embodiment of the disclosure.
FIG. 10 is a diagram for describing transition of the screen displayed on the display of the MFP according to the first embodiment of the disclosure.
FIG. 11 illustrates an example of the screen displayed on the display of the MFP according to the first embodiment of the disclosure.
FIG. 12 illustrates an example of the screen displayed on the display of the MFP according to the first embodiment of the disclosure.
FIG. 13 illustrates an example of the screen displayed on the display of the MFP according to the first embodiment of the disclosure.
FIG. 14 illustrates an example of the screen displayed on the display of the MFP according to the first embodiment of the disclosure.
FIG. 15 illustrates an example of the screen displayed on the display of the MFP according to the first embodiment of the disclosure.

### Description of Embodiments

Hereinafter, an embodiment of the disclosure will be described with reference to the drawings. For example, a Multi-Function Printer/Peripheral (MFP) 10 will be described as an embodiment of an image processing apparatus in the disclosure. Note that the MFP 10 according to the disclosure is not limited to any configuration as long as the MFP 10 is configured to be able to communicate with an authentication server 30 via a network NW. Note that the following embodiment is an example for describing the disclosure, an example of the disclosure described in the claims will be described, and the technical scope of the disclosure is not limited to the following description.
There is a technique that, when a user is authenticated by the authentication server 30 using the MFP 10 and uses a network service on the MFP 10, stores in the MFP 10 a refresh token issued from the authentication server 30 in association with user authentication information in the MFP 10. If the account information of the authentication server 30 is used for authenticating the user in the MFP 10, the refresh token and account information of the authentication server 30 are stored in the MFP 10. Therefore, there are also users who do not desire to store the refresh token in the MFP 10 because storing the refresh token and the account name is not preferable in terms of security, but the above technique does not consider these users. Furthermore, if the account information of the authentication server 30 stored in the MFP 10 and the account information input on an authentication screen of the authentication server 30 are different, the different information is stored as the user authentication information of the MFP 10, and management of the user authentication information becomes complicated.
An object of the disclosure is to facilitate management related to authentication in the information processing apparatus that uses a service on a network using authentication with a token, and is implemented by the following embodiment.

### 1. First embodiment

### 1.1 System configuration

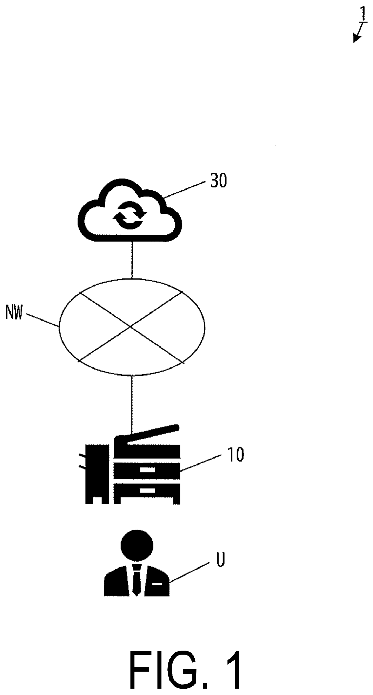

FIG. 1 is a schematic conceptual diagram of an authentication system 1 according to a first embodiment of the disclosure. The authentication system 1 includes a Multi-Function Printer/Peripheral (MFP) 10 and the authentication server 30. The MFP 10 and the authentication server 30 are communicably connected via the network NW. The MFP 10 is an example of an information processing apparatus according to the first embodiment of the disclosure. The authentication server 30 is a server for authenticating a user of a network service, and a user U is authenticated by the authentication server 30 using the MFP 10, and uses the network service on the MFP 10. The authentication server 30 will be also referred to as the network service 30.

### 1.2 Configuration of MFP 10

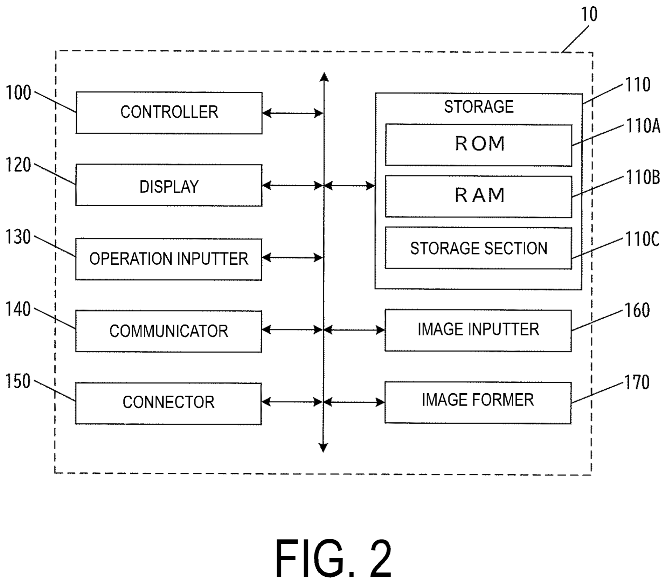

FIG. 2 is a block diagram of the MFP 10 according to the first embodiment of the disclosure. The MFP 10 is an image forming apparatus (image processing apparatus) that is also called a multi-function printer, and typically has a copy function, an image scanner function, a facsimile function, and a printer function. The MFP 10 may further have other functions, and may have, for example, an email sending/receiving function, a file server function, and the like.

A controller 100 controls the entire MFP 10. The controller 100 includes one or more control devices or one or more control circuits, and includes, for example, a Central Processing Unit (CPU) that is a processor that executes various arithmetic processes, a System on a Chip (SoC), and the like.

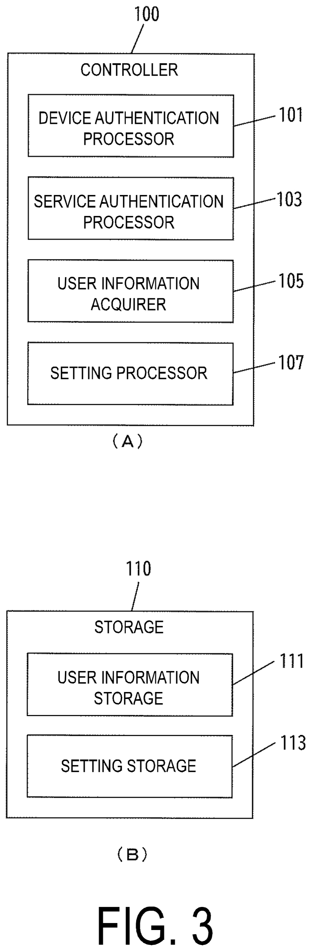

FIG. 3(A) is a block diagram for describing a configuration of the controller of the MFP 10 according to the first embodiment of the disclosure. The controller 100 reads programs stored in the storage 110 and executes processing to implement various functions including a device authentication processor 101, a service authentication processor 103, a user information acquirer 105, and a setting processor 107.

The device authentication processor 101 executes processing related to device authentication to be described later. The device authentication will be also referred to as second authentication. The service authentication processor 103 executes processing related to service authentication executed by the authentication server 30. The service authentication will be also referred to as first authentication. The user information acquirer 105 executes processing of acquiring user information from the authentication server 30. The setting processor 107 executes processing related to various settings of the MFP 10 including a setting of whether or not to store a refresh token in the MFP 10.

The storage 110 stores various programs and various types of data necessary for the operation of the image forming apparatus. The storage 110 includes one or more storage devices that can perform temporary storage, such as a Dynamic Random Access Memory (DRAM) or one or more non-temporary storage devices such as a Solid State Drive (SSD) made of a semiconductor memory or a Hard Disk Drive (HDD) made of a magnetic disk. Furthermore, for convenience of explanation, the storage 110 is configured as one unit, but may be configured as separate devices for each purpose, such as an area used for execution of programs (main storage area), an area that stores programs or data (auxiliary storage area), and an area used for caching.

FIG. 3(B) is a block diagram for describing a configuration of the storage 110 of the MFP 10 according to the first embodiment of the disclosure. The storage 110 includes a user information storage 111 and a setting storage 113. The user information storage 111 stores user information acquired by the user information acquirer 105. The user information acquirer 105 acquires an account name, a service password, and the like as user information. The account name and the service password are an account name and a password, respectively, registered by a user to use the network service 30 (authentication server 30). The service password will be also referred to as a first password, and a device password to be described later will be also referred to as a second password. Authentication information including the account name and the service password will be also referred to as first authentication information, and the authentication information including the account name and the device password will be also referred to as second authentication information. Note that it is assumed that character strings indicating the account name completely match between the first authentication information and the second authentication information of the same user.

Furthermore, the user information acquirer 105 acquires a refresh token issued by the authentication server 30 as the user information. The user information storage 111 associates an account name, a device password, and a refresh token with each other to store as the user information. The setting storage 113 stores information related to the setting set by the setting processor 107.

The display 120 displays images and characters. For example, the display 120 is configured of a Liquid Crystal Display (LCD), an organic Electro-Luminescence (EL) panel, or the like. The display 120 may be a single display device, or may further include a display device connected to the outside.

An operation inputter 130 accepts an operation input from the user. For example, the operation inputter 130 includes hardware keys and/or software keys. Furthermore, the operation inputter 130 includes operation keys such as task keys for instructing execution of tasks such as FAX transmission or image reading, and a stop key for instructing stop of an operation.

The operation inputter 130 can be configured as a touch panel that enables input via a display 120. If the operation inputter 130 is configured as the touch panel, the operation inputter 130 can detect, for example, user's touch, tap, and swipe operations with respect to an object displayed via the display 120, and can acquire a coordinate position, pressure-sensitive information, or the like of touch panel information. In this case, as an input scheme for the touch panel, a general input scheme such as a resistive film scheme, an infrared scheme, an electromagnetic induction scheme, or a capacitive scheme can be adopted.

A communicator 140 connects with a network. For example, the communicator 140 is configured of an interface that can be connected to a wired Local Area Network (LAN), a wireless LAN, or a Long Term Evolution (LTE) network. The communicator 140 is connected to a network for connection to another device or an external network. Furthermore, the communicator 140 may be an interface for performing short-distance wireless communication such as Near Field Communication (NFC) or Bluetooth (trade name).

The connector 150 connects the MFP 10 and another device (external device). For example, the connector 150 is a USB interface, and is connected with a USB memory or the like. Furthermore, other than a USB interface, the connector 150 may be an HDMI (trade name) interface or the like.

The image inputter 160 reads an image (document) and outputs the image as image data. The image inputter 160 is configured of a typical scanner (image input device). Furthermore, the image inputter 160 may receive an input of image data from an external storage medium such as a USB memory, or may receive an image via a network.

The image former 170 forms (prints) an image on a medium such as copy paper based on the image data. A printing scheme for the image former 170 is arbitrary, and may be, for example, any of an inkjet printer, a laser printer, a thermal transfer printer, and the like. The image former 170 may be a monochrome printer or a color printer. The image former 170 may include a paper feed mechanism that supplies the medium, a transport mechanism that transports the medium, a sorter mechanism that sorts the medium after an image is formed, and the like.

### 1.3 Operation of MFP 10

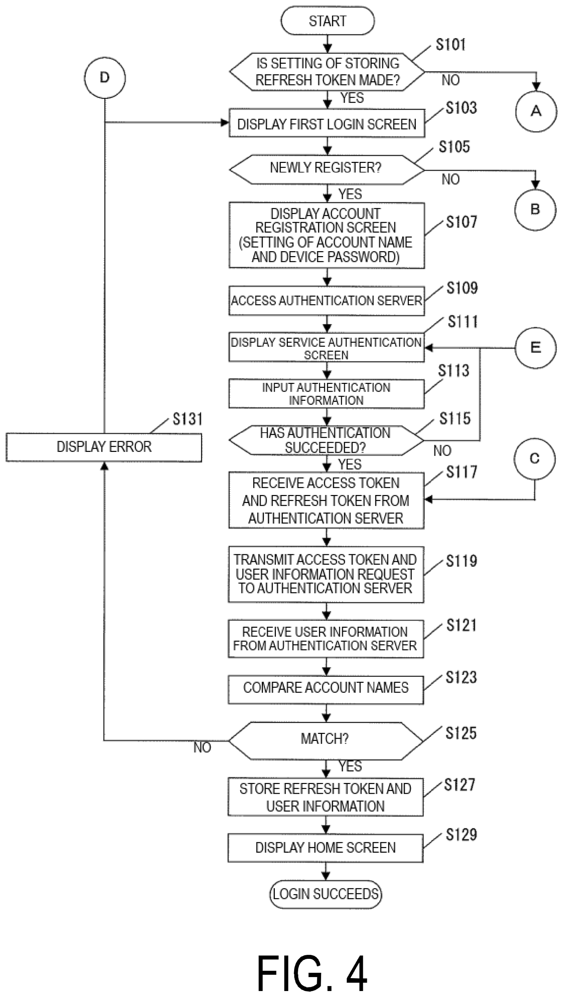

FIGS. 4, 5, and 6 are flow charts for describing an operation of the MFP 10 according to the first embodiment of the disclosure. Note that, although it is preferable that the following processing is appropriately executed by any of the components described in FIG. 3(A), for convenience of description, the following processing will be described assuming that the controller 100 executes the following processing.

It is assumed that, before the operation described below, the user U has registered an account name and a service password in the network service 30, and the user U knows their own account name and service password. Furthermore, it is assumed that the controller 100 functions as the setting processor 107 to display a setting screen on the display 120, accepts an input of various settings including a setting of whether or not to store a refresh token according to an operation of a user (e.g., a user having an administrator authority) such as the user U via the operation inputter 130, and stores setting information in the setting storage 113. The setting screen will be described in detail later.

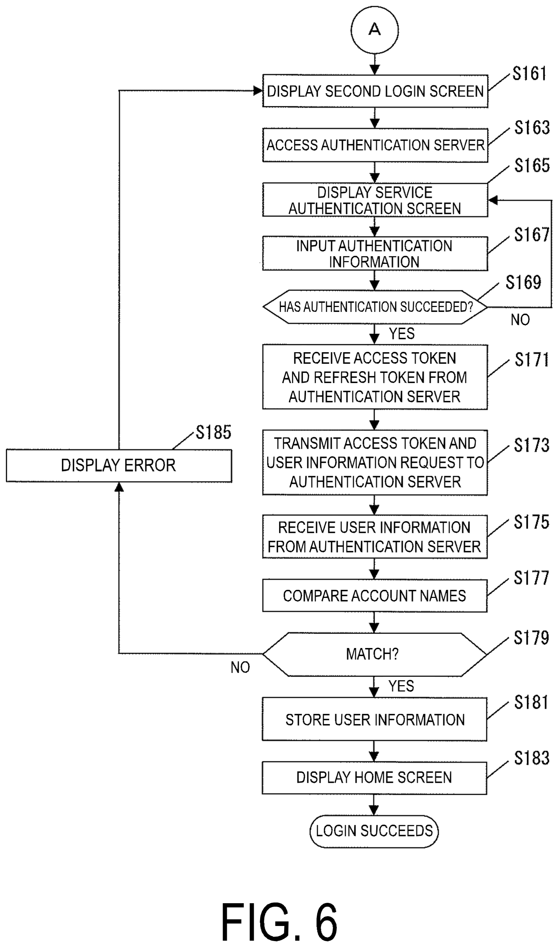

When displaying the user authentication screen, the controller 100 determines whether or not the setting of storing the refresh token is made based on the setting information stored in the setting storage 113 (step 101). If the setting of storing the refresh token is made (Yes in step 101), the controller 100 proceeds to step 103. If the setting of not storing the refresh token is made (No in step 101), the controller 100 proceeds to step 161 in FIG. 6.

In step 103, the controller 100 displays a first login screen on the display 120 (step 103). The first login screen is a screen for performing authentication using an account name and a device password to be described later or performing new registration related to this authentication. The first login screen will be described in detail later.

When the first login screen is displayed, if an operation of newly registering an account is accepted from the operation inputter 130 (Yes in step 105), the controller 100 displays an account registration screen on the display 120 (step 107). The account registration screen is a screen for causing the user U to register a device password to be associated with an account name (that may be referred to simply as an account name) of the network service 30 of the user U. The device password is a password that can be registered irrespectively of the service password of the network service 30, and is a password that is valid only in the MFP 10. The account registration screen will be described in detail later. When the device password is determined, the controller 100 may temporarily store the account name and the device password in association with each other in the user information storage 111.

When the account name and the device password are input on the account registration screen, the controller 100 accesses the authentication server 30 via the network NW using the communicator 140 (step 109). In response to this access, the authentication server 30 transmits data of a service authentication screen for authenticating users of the network service to the MFP 10. When the communicator 140 receives the data of the service authentication screen in the MFP 10, the controller 100 displays the service authentication screen on the display 120 (step 111).

The controller 100 accepts the account name and the service password input by the user U using the operation inputter 130 on the displayed service authentication screen (step 113). The controller 100 transmits the input account name and service password to the authentication server 30 via the network NW using the communicator 140. Note that, instead of inputting the account name input by the user U using the operation inputter 130 to the service authentication screen, the controller 100 may reflect the account name input on the first login screen as the account name on the service authentication screen.

The authentication server 30 executes authentication processing based on the received account name and service password. If the authentication succeeds (Yes in step 115), the authentication server 30 transmits the access token and the refresh token to the MFP 10. If the authentication fails (No in step 115), the authentication server 30 transmits the data of the service authentication screen to the MFP 10 again, and encourages the user U to input the account name and/or the service password again.

When the authentication in the authentication server 30 succeeds and the communicator 140 receives the access token and the refresh token (step 117), the communicator 140 transmits a user information request to the authentication server 30 together with the access token received from the authentication server 30 (step 119). The user information request is an acquisition request related to various information of the user U registered in the network service 30, and particularly includes an acquisition request related to the account name of the user U.

The authentication server 30 having received the access token and the user information request transmits user information of the user U to the MFP 10 in response to the user information request based on the access token.

When receiving the user information transmitted from the authentication server 30 (step 121), the controller 100 compares the account name of the user U registered in the network service 30 included in the received user information, and the account name of the user U input on the account registration screen (step 123). If these account names match (Yes in step 125), the controller 100 stores the refresh token received in step 117 in association with the account name of the user U in the user information storage 111 (step 127), displays a home screen on the display 120 (step 129), and performs processing assuming that login to the network service 30 has succeeded. If the account names compared in step 123 do not match (No in step 125), the controller 100 displays an error on the display 120 (step 131), and then returns to step 103 to display the first login screen.

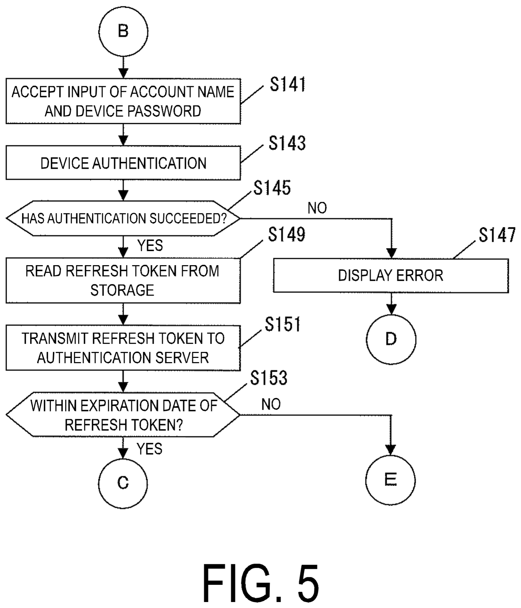

If the operation of selecting new registration is not performed on the first login screen displayed in step 103 (No in step 105), the processing proceeds to step 141 in FIG. 5, and the controller 100 accepts the input of the account name of the user U and the device password from the operation inputter 130 (step 141), and authenticates the user U based on the account name of the user U and the device password stored in the user information storage 111 (step 143). Hereinafter, like this authentication, authentication executed by the controller 100 based on the account name and the device password will be referred to as device authentication. The device authentication will be also referred to as second authentication.

If the device authentication fails (No in step 145), the controller 100 displays an error message indicating that device authentication has failed on the display 120 (step 147), and then returns to step 103 to display the first login screen. If the device authentication succeeds (Yes in step 145), the controller 100 reads the refresh token associated with the account name of the user U from the user information storage 111 (step 149), and transmits the refresh token to the authentication server 30 via the network NW using the communicator 140 (step 151). If the refresh token transmitted in step 151 is within an expiration date (Yes in step 153), the authentication server 30 transmits the access token and the refresh token to the MFP 10 via the network NW, and proceeds to above-described step 117. On the other hand, if the refresh token transmitted in step 151 has passed the expiration date (No in step 153), the authentication server 30 proceeds to above-described step 111.

Back to step 101, if the setting of not storing the refresh token is made (No in step 101), the controller 100 proceeds to step 161 in FIG. 6, and the controller 100 displays a second login screen on the display 120 (step 161). The second login screen accepts an input of an account name via the operation inputter 130. The second login screen will be described in detail later.

When the account name is input on the second login screen, the controller 100 accesses the authentication server 30 (step 163). In response to the access, the authentication server 30 transmits the data of the service authentication screen to the MFP 10, and, when the communicator 140 receives this data, the controller 100 displays the service authentication screen on the display 120 (step 165).

When the user U inputs the account name and the service password on the displayed service authentication screen using the operation inputter 130 (step 167), the controller 100 transmits the input account name and service password to the authentication server 30 via the network NW using the communicator 140. Note that, instead of transmitting the account name input by the user U using the operation inputter 130 to the authentication server 30, the controller 100 may store the account name input on the second login screen, and transmit the stored account name to the authentication server 30.

When receiving the account name and the service password, the authentication server 30 authenticates the account name and the service password, and transmits an authentication result to the MFP 10 via the network NW. If the authentication succeeds, the authentication server 30 transmits the access token and the refresh token to the MFP 10.

When the authentication result received by the communicator 140 indicates an authentication failure (No in step 169), the controller 100 returns to step 165 to encourage the user U to input the account name and the service password again. That is, unless the operation inputter 130 accepts an operation of interrupting communication with the authentication server 30 (e.g., an operation of ending displaying a browser that is being executed to access the authentication server 30), the controller 100 repeats displaying the service authentication screen, accepting the input of the authentication information, and transmitting the authentication information to the authentication server 30 until the authentication in the authentication server 30 succeeds.

If the authentication result received by the communicator 140 indicates an authentication success (Yes in step 169), the controller 100 receives the access token and the refresh token (step 171). The controller 100 transmits the received access token and user information request to the authentication server 30 via the communicator 140 and the network NW (step 173). The authentication server 30 having received the access token and the user information request responds to the user information request based on the access token, and transmits the user information to the MFP 10.

When the communicator 140 receives the user information (step 175), the controller 100 compares the account name input on the second login screen (step 161) and the account name included in the user information received in step 175, and determines whether or not the account names match each other (step 177).

If the two account names match (Yes in step 179), the controller 100 updates the user information stored in the user information storage 111 using the user information received in step 175 (step 181), displays the home screen on the display 120 (step 183), and performs processing assuming that the login to the network service 30 has succeeded. If the two account names do not match (No in step 179), the controller 100 displays an error on the display 120 (step 185), and returns to step 161.

The above description has been given assuming that, in step 117, the MFP 10 receives the access token and the refresh token from the authentication server 30. Furthermore, the above description has been given assuming that, in step 121, the MFP 10 receives the user information from the authentication server 30. However, in steps 117 and 121, for example, if an error response is received from the authentication server 30 or if reception fails for a reason of a network failure or the like, the controller 100 may display an error on the display 120 in the same manner as that in the case where "No" is selected in step 125 and the processing proceeds to step 131 to display the error.

Furthermore, the above description has been given assuming that, in step 175, the MFP 10 receives the user information from the authentication server 30. However, if an error response is received from, for example, the authentication server 30 in step 175 or if reception fails for a reason of a network failure or the like, the controller 100 may display an error on the display 120 in the same manner as that in the case where "No" is selected in step 179 and an error is displayed in step 185.

### 1.4 Operation example of authentication system

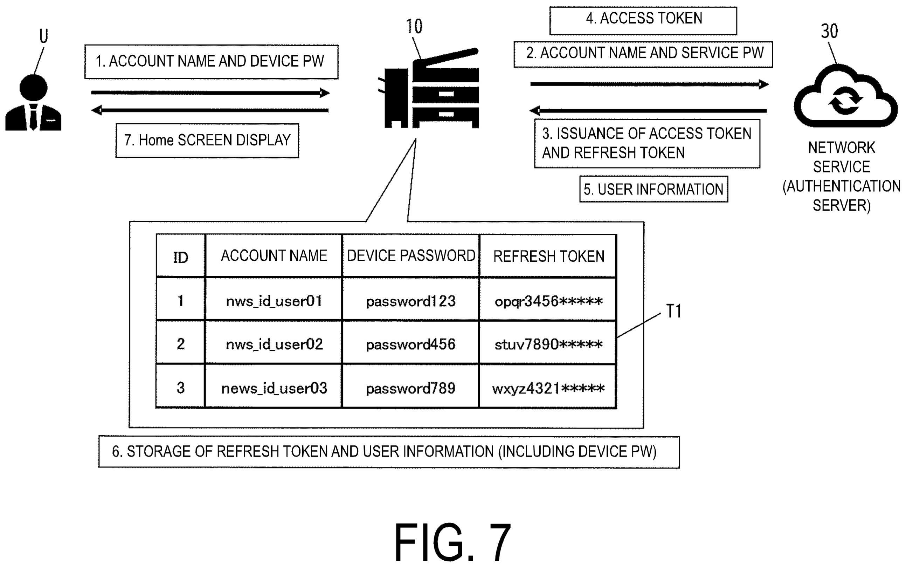

FIG. 7 is a schematic conceptual diagram for describing an operation example of the authentication system 1. In this example, it is assumed that the account name of the network service 30 and the device password are associated with each other and stored in the user information storage 111, and a setting of storing the refresh token is made in the MFP 10. First, when the user U inputs the account name and the device password (PW) to the MFP 10 (1), the MFP 10 performs device authentication based on the input account name and device password. When the authentication succeeds, the MFP 10 accesses the authentication server 30 and displays the service authentication screen. When the user U inputs an account name and a service password (PW) on the service authentication screen (2), the MFP 10 transmits the input account name and service password to the authentication server 30. The authentication server 30 authenticates the user U based on the received account name and service password, and transmits an access token and the refresh token to the MFP 10 (3). The MFP 10 transmits the user information request to the authentication server 30 together with the received access token (4). The authentication server 30 transmits user information corresponding to the access token to the MFP 10 in response to the user information request based on the access token transmitted from the MFP 10 (5). The MFP 10 having received the user information stores the account name of the user U, the device password, and the refresh token in association with each other in the user information storage 111 (6), and displays the home screen (7).

### 1.5 Screen transition of MFP

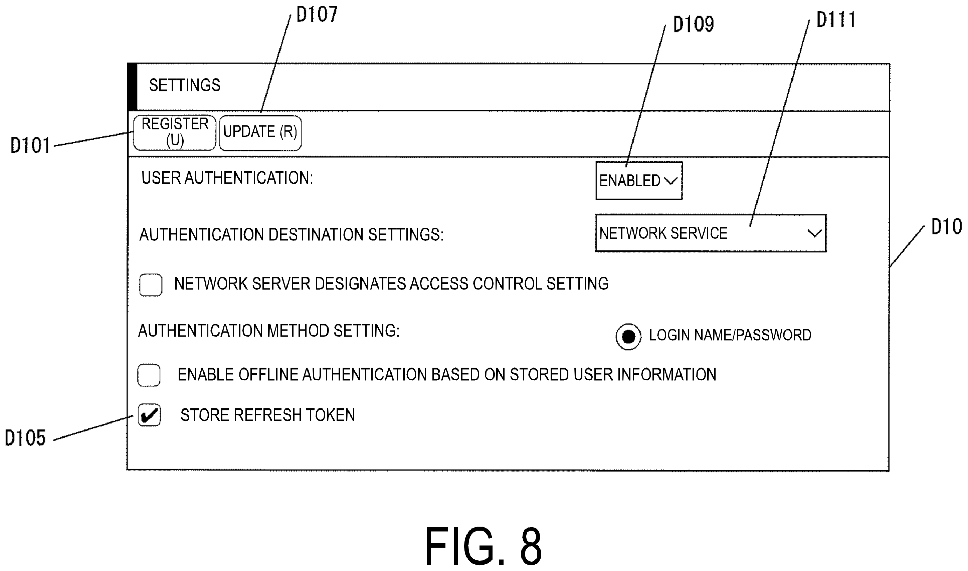

A screen D10 in FIG. 8 is an example of a setting screen. The screen D10 is displayed on the display 120 by the setting processor 107. The screen D10 includes a registration button D101, a checkbox D105, an update button D107, and pull-down menus D109 and D111.

The registration button D101 is a button for registering a setting in a state where the registration button D101 is displayed on the screen D10, and transitioning from the screen D10 to another screen (e.g., home screen). The checkbox D105 is a checkbox for setting whether or not to store the refresh token. The example in FIG. 8 indicates a state where the checkbox D105 is set to store the refresh token. The update button D107 is a button for updating the setting in a state where the update button D107 is displayed on the screen D10. The pull-down menu D109 is a pull-down menu for setting whether to enable or disable user authentication. The example in FIG. 8 indicates a state where the user authentication is set to be enabled in the pull-down menu D109. The pull-down menu D111 is a pull-down menu for setting an authentication destination when the user logs in to the MFP 10. The example in FIG. 8 indicates a state where the network service 30 is set as the authentication destination in the pull-down menu D111.

It may be possible to set whether or not to store the user information in the MFP 10. To enable this setting, for example, it is conceivable to provide a check box for setting whether or not to store the user information in the D10 of the screen in FIG. 8. If the setting of storing the user information in the user information storage 111 is set to be enabled in the MFP 10 that can set whether or not to store the refresh token, the controller 100 may enable the setting of storing the refresh token. On the other hand, if the setting of storing the refresh token is set to be enabled in this MFP 10, the setting may be restricted such that the setting of storing the user information in the user information storage 111 cannot be disabled.

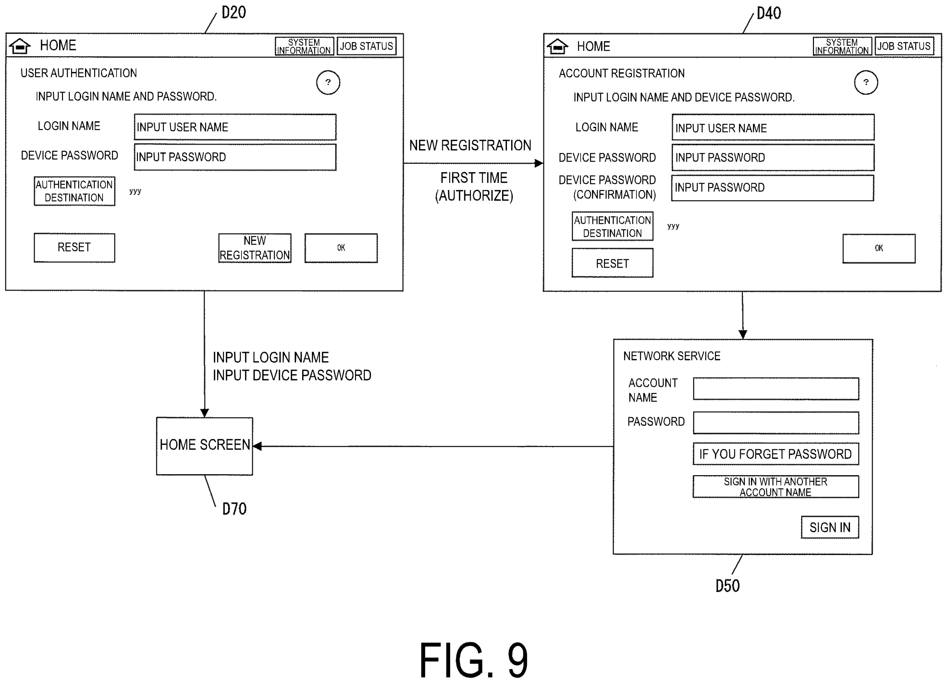

FIG. 9 is a diagram for describing screen transition when a setting of storing a refresh token is made. In the case of the setting of storing the refresh token, a first login screen D20 is first displayed (step 103). If new registration is selected on the first login screen D20 (Yes in step 105), an account registration screen D40 is displayed (step 107), and then a service authentication screen D50 is displayed (step 111). At this time, the service authentication screen D50 may be displayed in a state where the login name input on the account registration screen D40 is reflected in the account name of the service authentication screen D50. When a sign-in button is operated in a state where the account name and the service password of the network service 30 are input on the service authentication screen D50 (step 112) and authentication succeeds, a home screen D70 is displayed.

On the other hand, if new registration is not selected on the first login screen D20 (No in step 105), when the account name and the device password are input on the first login screen D20 (step 141), the refresh token is read from the storage 110 and transmitted to the authentication server 30, and, if the expiration date of the refresh token is within a valid period, an access token and a refresh token are issued from the authentication server 30. When the issued access token is transmitted to the authentication server 30 and authentication succeeds, the home screen D70 is displayed without displaying the service authentication screen D50.

As described above, according to the authentication system 1, if the setting of storing the refresh token is made, the account name (a login name or a user name) of the network service 30 and the device password are associated and registered, and, if the refresh token is within the valid period, the user can be authenticated by the authentication server 30 and can log in to the MFP 10 only by inputting the account name and the device password.

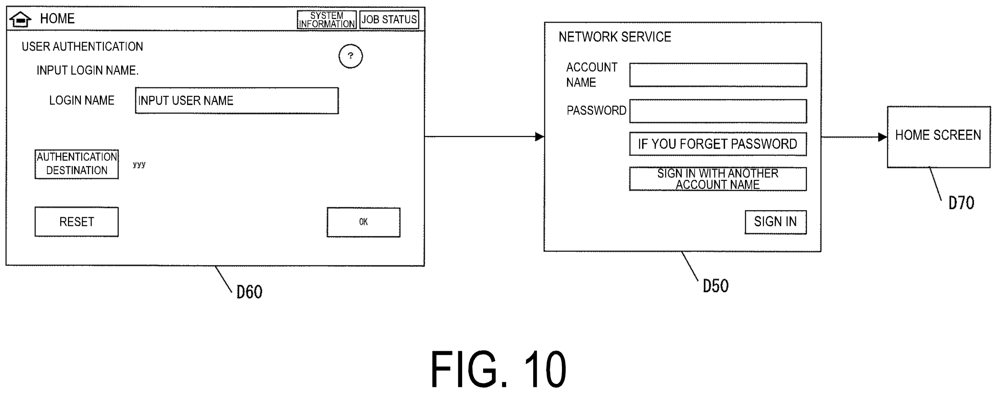

FIG. 10 is a diagram for describing screen transition when a setting of not storing a refresh token is made. In the case of the setting of not storing the refresh token, a second login screen D60 is first displayed (step 161). As described later, it is not necessary to input a device password on the second login screen D60, and, when the account name of the network service 30 is input, the screen transitions to the service authentication screen D50 (step 165). When the account name and the service password are input on the service authentication screen D50 (step 167) and authentication in the network service 30 succeeds, an access token and a refresh token are issued from the authentication server 30, and, when the issued access token is transmitted to the authentication server 30 and the authentication succeeds, the screen transitions to the home screen D70 (step 183).

### 1.6 Screen example of MFP

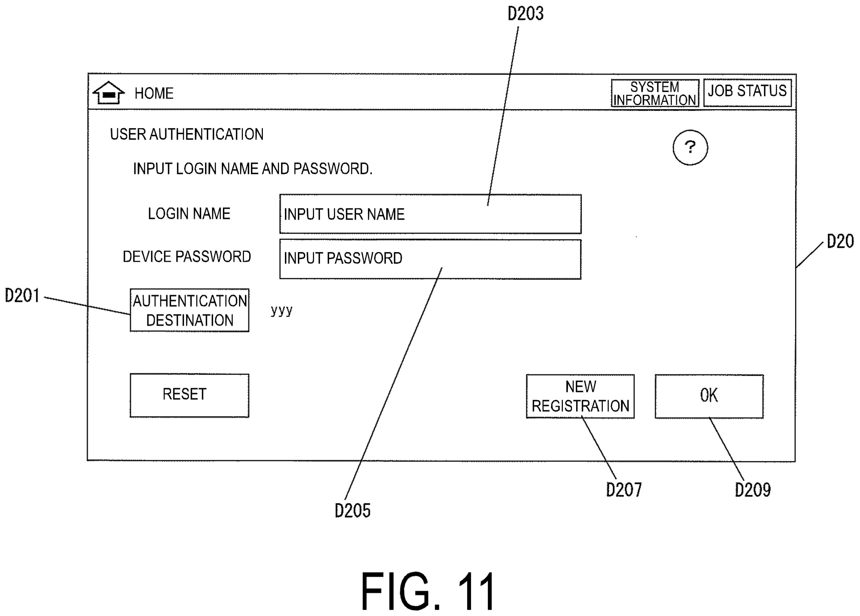

FIG. 11 is a diagram illustrating an example of the first login screen D20. The first login screen D20 includes an authentication destination button D201, text input fields D203 and D205, a new registration button D207, and an OK button D209. The authentication destination button D201 is a button for changing the authentication server (network service) 30 that is the authentication destination according to an operation via the operation inputter 130. In the figure, "yyy" is displayed as a name of the network service 30. Note that, instead of displaying the name of the network service 30 as the authentication destination, a domain name of the authentication destination of the network service 30 may be displayed. When the authentication destination button D201 is operated via the operation inputter 130, an authentication destination designation screen D30 to be described later is overlaid and displayed on the first login screen D20. The text input field D203 is a field for inputting a login name (account name) via the operation inputter 130. The text input field D205 is a field for inputting a device password via the operation inputter 130. The new registration button D207 is a button for newly registering a device password corresponding to a login name (account name) inputted in the text input field D203, and, when the new registration button D207 is operated via the operation inputter 130, the controller 100 determines "Yes" in step 105 in FIG. 4, and proceeds to "display account registration screen" in step 107. When the OK button D209 is operated via the operation inputter 130, the controller 100 executes device authentication in steps 141 to 145 in FIG. 5 based on the login name (account name) input in the text input field D203 and the device password input in the text input field D205.

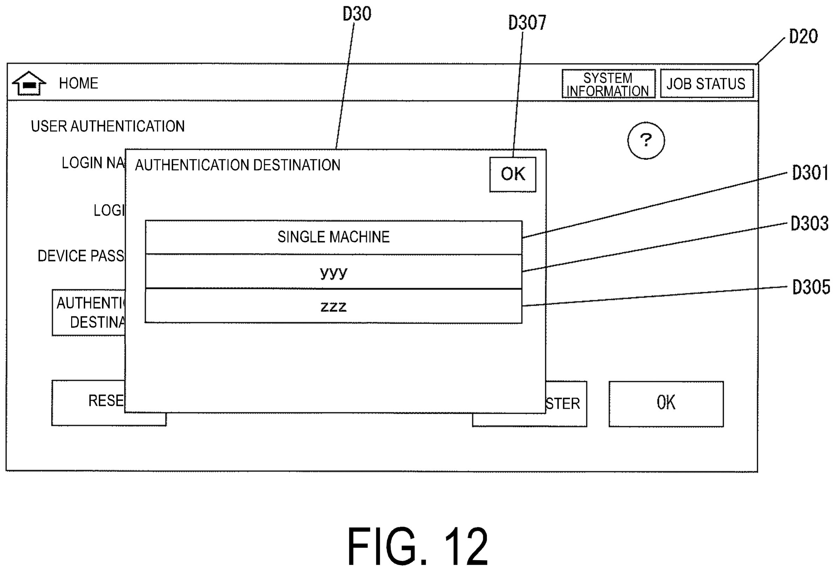

FIG. 12 is a diagram illustrating an example of a case where an authentication destination designation screen D30 is displayed in response to the operation of the authentication destination button D201 on the first login screen D20. The authentication destination designation screen D30 is a screen for selecting an authentication destination. The authentication destination designation screen D30 includes buttons D301 and D303, a text input field D305, and a button D307, but is not limited thereto. The button D301 is a button for selecting a single machine (the MFP 10 in the present embodiment) as the authentication destination. The button D303 is a button for selecting "yyy" that is a designation item for designating the network service 30 as the authentication destination in the example in FIG. 12. Since "yyy" is selected as the authentication destination in the first login screen D20, the button D303 may be displayed in a display mode (a different display color or the like) different from that of the other buttons that are not selected. The text input field D305 is a field for additionally inputting another authentication destination as an option via the operation inputter 130, and functions as the button D305 after the authentication destination is additionally input. In the example in FIG. 12, the button D305 for selecting an authentication service designated as "zzz" as an authentication destination is displayed. The button D307 is a button for confirming the selection of the authentication destination, and the authentication destination selected by the user at a point of time when the button D307 is operated is confirmed as a new authentication destination.

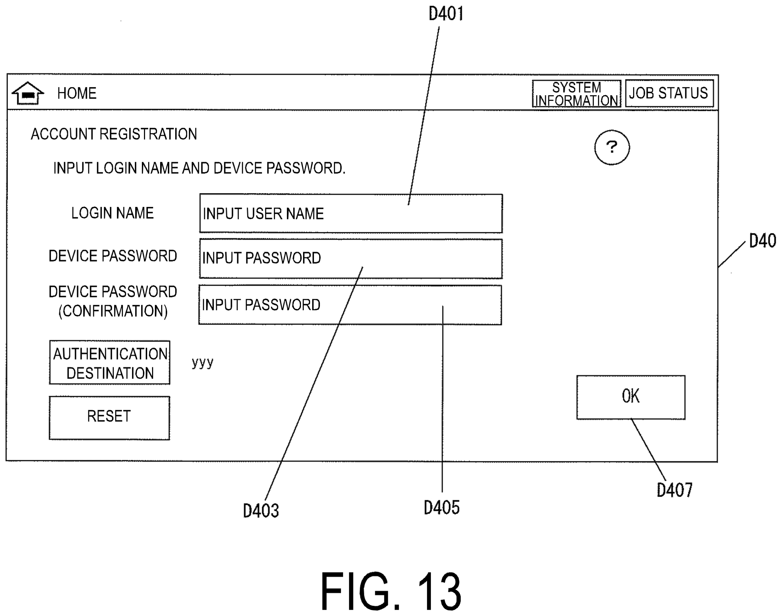

FIG. 13 is a diagram illustrating an example of the account registration screen D40. The account registration screen D40 includes text input fields D401, D403, and D405 and a button D407. The text input field D401 is a field for inputting a login name (account name) to be registered via the operation inputter 130. The text input field D403 is a field for inputting a device password via the operation inputter 130. The text input field D405 is a field for inputting a device password again via the operation inputter 130. The button D407 accepts an operation for registering a login name (account name) and a device password in association with each other based on inputs to the text input fields D401, D403, and D405 according to the operation via the operation inputter 130. When the button D407 is operated via the operation inputter 130, the controller 100 compares character strings input in the text input fields D403 and D405 with each other, and, if the character strings match, accepts an operation for registering an account whose login name (account name) is the character string input in the text input field D401 and whose device password is the character strings input in the text input fields D403 and D405. If the character strings input in the text input fields D403 and D405 do not match each other, the controller 100 encourages the device password to be input again by displaying an error message on the display 120. Note that, since the account name of the user U registered in the network service 30 needs to be input in the text input field D401, the user may be guided by, for example, displaying on the account registration screen D40 that the account name needs to be input.

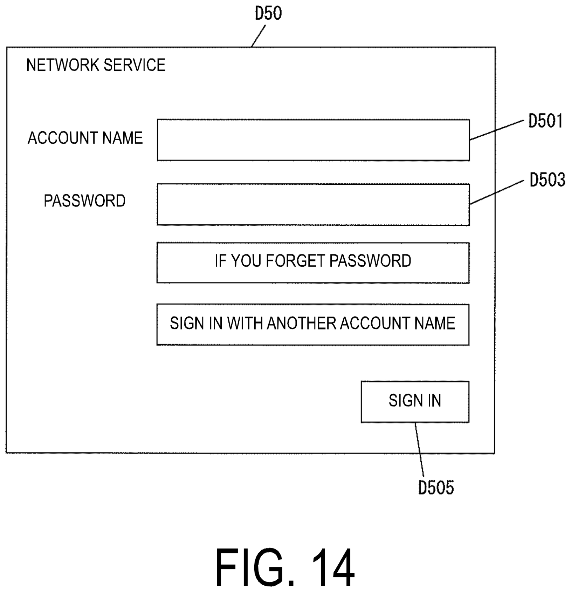

FIG. 14 is a diagram illustrating an example of the service authentication screen D50. The authentication server 30 transmits screen data of the service authentication screen D50 to the MFP 10 via the network NW. When the communicator 140 receives the screen data of the service authentication screen D50 in the MFP 10, the controller 100 displays the service authentication screen D50 on the display 120 based on this screen data.

The service authentication screen D50 includes text input fields D501 and D503 and a button D505. The text input field D501 is a field for inputting an account name of a network service via the operation inputter 130. The text input field D503 is a field for inputting a service password via the operation inputter 130. The button D505 is a button for requesting the authentication server 30 to execute service authentication, and, when the button D505 is operated, the authentication server 30 executes service authentication that uses as an account name a character string input in the text input field D501 and uses as a service password a character string input in the text input field D503. Note that the service authentication screen D50 may include a button for changing the service password, and a button for changing the account name for signing in.

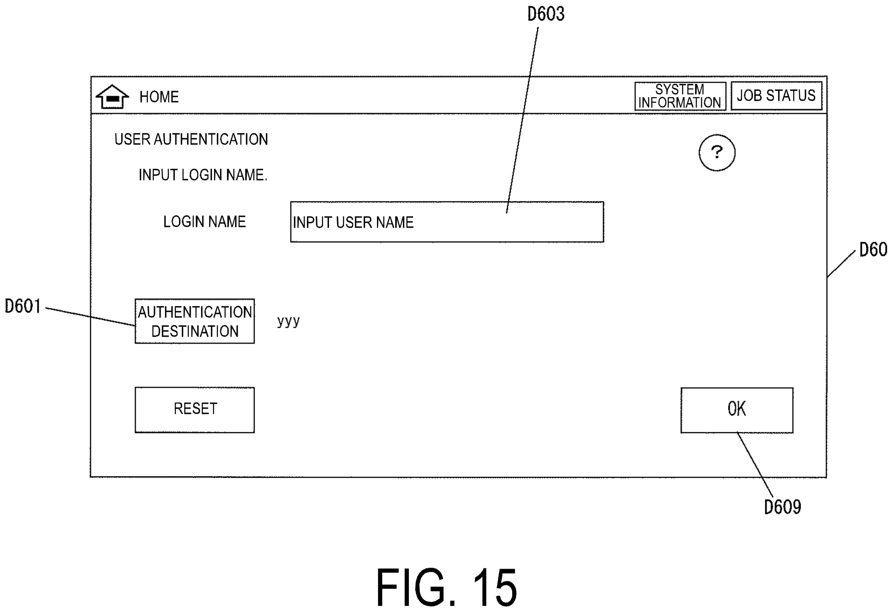

FIG. 15 is a diagram illustrating an example of the second login screen D60. The second login screen D60 includes a button D601, a text input field D603, and a button D609. The button D601 is a button for changing the authentication server (network service) 30 that is the authentication destination according to an operation via the operation inputter 130. In the figure, "yyy" is described as the name of the network service 30. When the button D601 is operated via the operation inputter 130, the authentication destination designation screen D30 is overlaid and displayed on the second login screen D60. The text input field D603 is a field for inputting a login name (account name) via the operation inputter 130. The button D609 is an OK button, and, when the button D609 is operated via the operation inputter 130, the controller 100 executes service authentication in steps 163 to 169 in FIG. 6 based on the login name (account name) input in the text input field D603.

### 1.7 Effects

As described above, in a case where the setting of storing the refresh token is made (Yes in step 101) and new registration is not performed (No in step 105), the user U can accept the access token from the authentication server 30 only by inputting the account name and the device password of the network service 30 within the expiration period of the refresh token. At this time, the user U does not need to input a service password, so that it is possible to reduce a risk of leakage of the service password. The device password is a password used only for authentication inside the MFP 10, and, even if a third party illegally obtains the device password, the device password is disabled in a device other than the MFP 10, and, even if the device password of the MFP 10 is used in the device other than the MFP 10, the access token cannot be accepted from the authentication server 30, so that it is possible to reduce a risk compared to a case where the service password leaks. Even if the setting of storing the refresh token is made (Yes in step 101) and new registration is performed (Yes in step 105), the account name input on the account registration screen (step 107) and the account name included in the user information received from the authentication server 30 are compared (step 125), and an error is displayed if the account names do not match (step 131). Consequently, it is possible to check whether or not the account name input when an account is registered in the MFP 10 and the account name authenticated by the authentication server 30 match, and, if the account names do not match, it is possible to restrict the operation by a person who is currently operating the MFP 10.

Furthermore, in a case where the setting of not storing the refresh token is made (No in step 101), the account name input on the second login screen (step 161) and the account name included in the user information received from the authentication server 30 are compared (step 177), and, if the account names do not match, an error is displayed (step 185). Consequently, it is possible to check whether or not the account name input when logging in to the MFP 10 matches the account name authenticated by the authentication server 30, and, if the account names do not match, it is possible to restrict the operation by the person who is currently operating the MFP 10.

As described above, the MFP 10 can select a setting of whether or not to store the refresh token. Consequently, when operating the MFP 10, an administrator of the MFP 10 can make a setting of not storing the refresh token if storage of the refresh token in the MFP 10 is restricted by the security policy defined by the administrator or the network service, and, on the other hand, can make a setting of storing the refresh token if there is no such restriction.

### 2. Modification Examples

The disclosure is not limited to the above-described embodiment, and various modifications can be made. In other words, the technical scope of the disclosure also includes embodiments obtained by combining technical means that are appropriately modified within the scope of the gist of the disclosure.

Although the authentication server 30 authenticates the user U based on the account name and the service password input by the user U via the operation inputter 130 in step 113, the authentication server 30 may authenticate the user U using another authentication method. For example, the authentication server 30 may authenticate the user U based on a result of biometrics authentication (e.g., fingerprint recognition, face recognition, or the like) performed in a terminal other than the MFP 10 possessed by the user U such as a mobile telephone, a smartphone, or a personal computer of the user U, or authentication that uses a Personal Identification Number (PIN) code. In the disclosure, information used by the authentication server 30 to authenticate the user U is collectively referred to as authentication information (or first authentication information). The first authentication information includes information related to a result of authentication performed by another terminal in addition to information such as an account name and a service password necessary for so-called password authentication.

The programs running on each device in the embodiment are programs for controlling a CPU or the like (programs for causing a computer to function) to implement the aforementioned functions in the embodiment. Furthermore, information handled by these devices is temporarily accumulated in a temporary storage device (e.g., a RAM) during processing, is then stored in storage devices such as various Read Only Memories (ROMs), HDDs, and Solid State Drives (SSDs), and is read, modified, and written by a CPU as necessary.

Here, the recording medium storing the programs may be any of a semiconductor medium (e.g., a ROM or a nonvolatile memory card), an optical recording medium or a magnetooptical recording medium (e.g., a Digital Versatile Disc (DVD), a Magneto Optical disc (MO), a Mini Disc (MD), a Compact Disc (CD), or a Blu-ray (trade name) Disc (BD)), a magnetic recording medium (e.g., a magnetic tape or a flexible disk), and the like. Furthermore, not only the functions of the above-described embodiment are implemented by executing the loaded program, but also the functions of the disclosure may also be implemented by processing in cooperation with an operating system, another application program, or the like, based on instructions from the program.

Furthermore, when a program is distributed in a market, the program can be stored in a portable recording medium and distributed, or can be transferred to a server computer connected via a network such as the Internet. In this case, it is obvious that a storage device of the server computer is also included in the disclosure.

### Reference Signs List

- 1: Authentication system
- 10: Multi-Function Printer/Peripheral (MFP)
- 30: Network service (authentication server)
- 100: Controller
- 101: Device authentication processor
- 103: Service authentication processor
- 105: User information acquirer
- 107: Setting processor
- 110: Storage
- 110A: ROM (Read Only Memory)
- 110B: RAM (Random Access Memory)
- 110C: Storage section
- 111: User information storage
- 113: Setting storage
- 120: Display
- 130: Operation inputter
- 140: Communicator
- 150: Connector
- 160: Image inputter
- 170: Image former
- NW: Network
- U: User

## Claims

1. An information processing apparatus (10) comprising:
one or more controllers (100);
a communicator (140) capable of communicating with a server (30) via a network (NW), the server (30) executing first authentication based on first authentication information including an account name; and
a storage (110),
wherein the one or more controllers (100) receive a refresh token transmitted by the server (30) according to a result of the first authentication, and control storage of the refresh token in the storage (110) based on a setting related to whether or not to store the refresh token in the storage (110).

2. The information processing apparatus (10) according to claim 1, wherein
the first authentication information includes the account name and a first password,
the storage (110) stores a second password different from the first password and the account name in association with each other, and
the one or more controllers (100) execute second authentication based on the account name and the second password.

3. The information processing apparatus (10) according to claim 2, wherein, if the setting of storing the refresh token in the storage (110) is made, the one or more controllers (100) store the refresh token in association with the account name and the second password in the storage (110).

4. The information processing apparatus (10) according to claim 3, wherein, if the setting of storing the refresh token in the storage (110) is made, the one or more controllers (100) accept an input of the account name and the second password, and transmit the refresh token stored in association with the input account name and second password in the storage (110), to the server (30) using the communicator (140).

5. The information processing apparatus (10) according to claim 3, further comprising an operation inputter (130),
wherein, if the setting of not storing the refresh token in the storage (110) is made, the one or
more controllers (100)
accept an input of the account name and the first password using the operation inputter (130),
and
transmit the accepted account name and first password to the server (30) using the communicator (140).

6. A method of controlling an information processing apparatus (10) that includes a communicator (140) capable of communicating with a server (30) via a network (NW), the server (30) executing first authentication based on first authentication information including an account name, and a storage (110), the method comprising:
a step of receiving a refresh token transmitted by the server (30) according to a result of the first authentication; and
a step of controlling storage of the refresh token in the storage (110) based on a setting related to whether or not to store the refresh token in the storage (110).
